# EUROPEAN PATENT APPLICATION

(11) **EP 4 113 984 A1**
(43) Date of publication of application: **04.01.2023**
(21) Application number: 22181334.8
(22) Date of filing: 27.06.2022
(51) Int. Cl.: H04N 7/14, H04N 7/15

(54) **MULTIMEDIA SYSTEM AND MULTIMEDIA OPERATION METHOD**

(30) Priority: 29.06.2021 CN 202110725141
(71) Applicant: Optoma Coporation, New Taipei City 231633 (TW)
(72) Inventor: WANG, WEN-TAI, 231633 New Taipei City (TW); CHANG, SHENG-FENG, 231633 New Taipei City (TW)
(74) Representative: Ter Meer Steinmeister & Partner

(57) **Abstract**

The invention relates to a multimedia system and a multimedia operation method. The multimedia system includes a first portable electronic device, a collaboration device, a camera, and an audio-visual processing device. The first portable electronic device provides a first operation instruction. The collaboration device is coupled to the first portable electronic device and receives the first operation instruction. The collaboration device provides a multimedia picture, and the multimedia picture is changed with the first operation instruction. The camera provides a video image. The audio-visual processing device is coupled to the collaboration device and the camera, and the audio-visual processing device receives the multimedia picture and a video image, and outputs a synthesized image with an immersive audio-visual effect according to the multimedia picture and the video image.

## Description

This application claims the priority benefit of China application serial no. 202110725141.X, filed on June 29, 2021.

### BACKGROUND OF THE INVENTION

### Field of the Invention

The invention relates to an audio-visual technique, and in particular to a multimedia system and a multimedia operation method.

### Description of Related Art

With the increasing demand for remote video services such as distance learning, video conferences, and online speeches, etc., how to enrich the user experience of video operations is one of the main development directions in the art. For example, teachers and students have changed from being in the same physical classroom to being in different physical locations, conducting lectures and discussions. However, the current online teaching system communicates and teaches via the video and the sound of the online conference system, and lack the sense of immersion and interaction that is very important in teaching.

Moreover, a general remote video service may only provide a simple image capture function, such as capturing a user's speech while standing in front of a presentation, or capturing a real-time facial image of the user facing the camera, for example. In other words, a general remote video service may only provide simple and boring image content to the viewer's equipment. In view of this, the following proposes solutions of several embodiments for how to provide a diverse and good user experience video effect.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY OF THE INVENTION

The invention provides a multimedia system and a multimedia operation method that may synthesize a multimedia picture and a video image to provide an audio-visual content of immersive education.

Other objects and advantages of the invention may be further understood from the technical features disclosed by the invention.

The object is solved by the features of the independent claims. Preferred embodiments are given in the dependent claims.

In order to achieve one or part or all of the above objects or other objects, the multimedia system of the invention includes a first portable electronic device, a collaboration device, a camera, and an audio-visual processing device. The first portable electronic device is configured to provide a first operation instruction. The collaboration device is coupled to the first portable electronic device and configured to receive the first operation instruction. The collaboration device provides a multimedia picture, and the multimedia picture is changed with the first operation instruction. The camera is configured to provide a video image. The audio-visual processing device is coupled to the collaboration device and the camera, and configured to receive the multimedia picture and a video image, in order to output a synthesized image according to the multimedia picture and the video image.

In order to achieve one or part or all of the above objects or other objects, a multimedia operation method of the invention includes the following steps: providing a first operation instruction via a first portable electronic device; receiving the first operation instruction via a collaboration device and providing a multimedia picture, wherein the multimedia picture is changed with the first operation instruction; providing a video image via a camera; and receiving the multimedia picture and the video image via an audio-visual processing device and outputting a synthesized image according to the multimedia picture and the video image.

In an embodiment of the invention, the multimedia picture may include at least one of a slide picture, an image, a three-dimensional object, a webpage picture, an image generated by a camera or an audio-visual streaming device, and a current screen display picture of the first portable electronic device.

In an embodiment of the invention, the audio-visual processing device may be further configured to receive an image input stream, and to output the synthesized image according to the multimedia picture, the video image, and the image input stream.

In an embodiment of the invention, the audio-visual processing device may be further configured to transmit the synthesized image to a video conference server via the audio-visual processing device, and a video conference audio-visual content provided by the video conference server may include the synthesized image.

In an embodiment of the invention, the first portable electronic device may include a touch display screen.

In one or more embodiments, the touch display screen may be configured to display a scene selection interface.

In one or more embodiments, the scene selection interface may include a plurality of scene selections.

In one or more embodiments, the first portable electronic device may output a scene switching instruction to the collaboration device according to a touch selection result of the scene selection interface.

In one or more embodiments, the collaboration device may provide the scene switching instruction to the audio-visual processing device.

In one or more embodiments, the audio-visual processing device may switch an image synthesis format displayed by the synthesized image according to the scene switching instruction.

In an embodiment of the invention, the first portable electronic device may include a touch display screen, and the first portable electronic device may be configured to output a picture operation instruction to the collaboration device according to a touch result of the touch display screen, and the collaboration device may change the multimedia picture according to the picture operation instruction.

In an embodiment of the invention, the first portable electronic device may include an acceleration sensor.

In one or more embodiments, the acceleration sensor may be configured to output another picture operation instruction to the collaboration device according to at least one of a movement operation and a rotation operation of the first portable electronic device, and the collaboration device may change the multimedia picture according to the other picture operation instruction.

In an embodiment of the invention, the multimedia system may further include a second portable electronic device.

In one or more embodiments, the second portable electronic device may communicate with the first portable electronic device and may be configured to provide a first permission request instruction to the first portable electronic device.

In one or more embodiments, the first portable electronic device may generate a first consent instruction according to the first permission request instruction.

In one or more embodiments, the first portable electronic device may provide a second operation instruction provided by the second portable electronic device to the collaboration device according to the first permission request instruction and the first consent instruction, and the multimedia picture may be changed with the second operation instruction.

In an embodiment of the invention, the multimedia system may further include a third portable electronic device.

In one or more embodiments, the third portable electronic device may communicate with the first portable electronic device and may be configured to provide a second permission request instruction to the first portable electronic device.

In one or more embodiments, the first portable electronic device may generate a second consent instruction according to the second permission request instruction.

The first portable electronic device may provide a third operation instruction provided by the third portable electronic device to the collaboration device according to the second permission request instruction and the second consent instruction, and the multimedia picture may be changed with the third operation instruction, wherein the collaboration device may execute sequentially according to a receiving order of the first to third operation instructions.

In an embodiment of the invention, the multimedia system may further include a third portable electronic device, communicating with the second portable electronic device and configured to provide a third permission request instruction to the second portable electronic device, wherein the second portable electronic device generates a third consent instruction according to the third permission request instruction, and the second portable electronic device may provide a fourth operation instruction provided by the third portable electronic device to the collaboration device according to the third permission request instruction and the third consent instruction, and the multimedia picture may be changed with the fourth operation instruction.

In one or more embodiments, the method may further comprise receiving an image input stream via the audio-visual processing device; and outputting the synthesized image via the audio-visual processing device according to the multimedia picture, the video image, and the image input stream.

In one or more embodiments, the method may further comprise transmitting the synthesized image to a video conference server via the audio-visual processing device, and a video conference audio-visual content provided by the video conference server comprises the synthesized image.

In one or more embodiments, the method may further comprise providing a first permission request instruction to the first portable electronic device via a second portable electronic device.

In one or more embodiments, the method may further comprise generating a first consent instruction via the first portable electronic device according to the first permission request instruction.

In one or more embodiments, the method may further comprise providing a second operation instruction provided by the second portable electronic device to the collaboration device via the first portable electronic device according to the first permission request instruction and the first consent instruction.

In one or more embodiments, the method may further comprise changing the multimedia picture via the collaboration device according to the second operation instruction.

In one or more embodiments, the method may further comprise providing a second permission request instruction to the first portable electronic device via a third portable electronic device;

generating a second consent instruction via the first portable electronic device according to the second permission request instruction.

In one or more embodiments, the method may further comprise providing a third operation instruction provided by the third portable electronic device to the collaboration device via the first portable electronic device according to the second permission request instruction and the second consent instruction.

In one or more embodiments, the method may further comprise changing the multimedia picture via the collaboration device according to the third operation instruction.

In one or more embodiments, the collaboration device may execute sequentially according to a receiving order of the first to third operation instructions.

In one or more embodiments, the method may further comprise providing a third permission request instruction to the second portable electronic device via a third portable electronic device.

In one or more embodiments, the method may further comprise generating a third consent instruction via the second portable electronic device according to the third permission request instruction.

In one or more embodiments, the method may further comprise providing a fourth operation instruction provided by the third portable electronic device to the collaboration device via the second portable electronic device according to the third permission request instruction and the third consent instruction.

In one or more embodiments, the method may further comprise changing the multimedia picture via the collaboration device according to the fourth operation instruction.

Based on the above, the multimedia system and the multimedia operation method of the invention may synthesize a multimedia picture and a video image to output a synthesized image with an immersive audio-visual effect, and the multimedia picture part in the synthesized image may be changed correspondingly with the first operation instruction provided by the user via the first portable electronic device, so as to reduce the problem of rigid online teaching, and create a brand new immersive distance learning experience.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of a multimedia system of an embodiment of the invention.
FIG. 2 is a flowchart of a multimedia operation method of an embodiment of the invention.
FIG. 3 is a schematic diagram of a multimedia system of another embodiment of the invention.
FIG. 4 is a schematic diagram of a scene selection interface of an embodiment of the invention.
FIG. 5 is a schematic diagram of a portable electronic device of an embodiment of the invention.
FIG. 6 is a schematic flowchart of an operation scenario of the first embodiment of the invention.
FIG. 7 schematic flowchart of an operation scenario of the second embodiment of the invention.
FIG. 8 is a schematic flowchart of an operation scenario of the third embodiment of the invention.
FIG. 9 schematic flowchart of an operation scenario of the fourth embodiment of the invention.
FIG. 10 is a schematic flowchart of an operation scenario of the fifth embodiment of the invention.
FIG. 11 schematic flowchart of an operation scenario of the sixth embodiment of the invention.

### DESCRIPTION OF THE EMBODIMENTS

It is to be understood that other embodiment may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

In order to make the content of the invention more comprehensible, the following embodiments are specifically provided as examples on which the disclosure may indeed be implemented. In addition, wherever possible, elements/members/steps with the same reference numerals in the figures and embodiments represent the same or similar components. The foregoing and other technical content, features, and effects of the invention are clearly presented in the following detailed description of preferred embodiments with reference to the accompanying figures. In addition, the terminology mentioned in the embodiments, such as: up, down, left, right, front, rear, etc., are only directions referring to the figures. Therefore, the directional terms used are for illustration and not for limiting the invention.

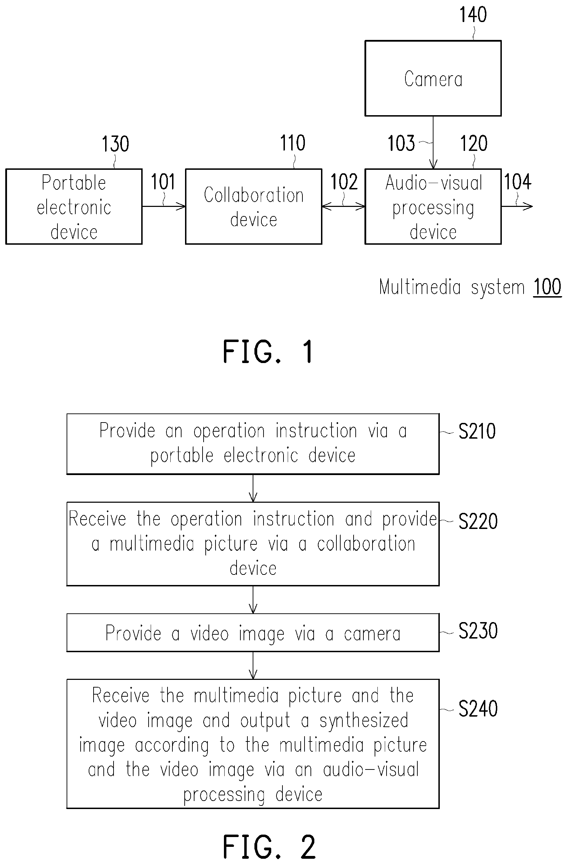

FIG. 1 is a schematic diagram of a multimedia system according to an embodiment of the invention. Referring to FIG. 1, a multimedia system 100 includes a collaboration device 110, an audio-visual processing device 120, a portable electronic device 130, and a camera 140. The collaboration device 110 is coupled to the audio-visual processing device 120 and the portable electronic device 130. The audio-visual processing device 120 is coupled to the camera 140. In the present embodiment, the portable electronic device 130 may communicate with the collaboration device 110 via wireless communication, and provide an operation instruction 101 to the collaboration device 110. The collaboration device 110 stores the content of a plurality of multimedia pictures 102. The collaboration device 110 may determine the content of the multimedia pictures 102 according to the operation instruction 101, and the collaboration device 110 provides the multimedia pictures 102 to the audio-visual processing device 120. The camera 140 provides a video image 103 to the audio-visual processing device 120. Therefore, the audio-visual processing device 120 may generate a synthesized image 104 according to the multimedia pictures 102 and the video image 103. In other embodiments, the audio-visual processing device 120 may generate the synthesized image 104 according to one of the multimedia pictures 102 and the video image 103. In the present embodiment, the audio-visual processing device 120 may output the synthesized image 104 to a remote electronic device, a server, or an online conference system, etc., but the invention is not limited in this regard. In an embodiment, the audio-visual processing device 120 may also output the synthesized image 104 to the portable electronic device 130 so that the user may view the synthesized image 104.

In the present embodiment, the collaboration device 110 may be, for example, a computer device executing a collaboration hub program, software, or related algorithms. The computer device may be, for example, a desktop computer, a personal computer (PC), a laptop PC, or a tablet PC, etc., and the invention is not limited in this regard. The collaboration device 110 may include a processing device and a storage device. The processing device may include a central processing unit (CPU) with image data processing and computing functions, or other programmable general-purpose or application-specific microprocessors, digital signal processors (DSPs), image processing units (IPUs), graphics processing units (GPU), programmable controllers, application-specific integrated circuits (ASICs), programmable logic devices (PLDs), other similar processing devices, or a combination of these devices. The storage device may be a memory, such as dynamic random-access memory (DRAM), flash memory, or non-volatile random-access memory (NVRAM), etc. The storage device may store a plurality of multimedia picture data, related multimedia data, multimedia processing programs, operation instructions, etc., for the processing device to access and execute.

In the present embodiment, the audio-visual processing device 120 may be connected to the collaboration device 110 and communicate with the collaboration device 110 in a wired or wireless manner. The audio-visual processing device 120 may be connected to the camera 140 and communicate with the camera 140 in a wired or wireless manner. The audio-visual processing device 120 may be an independent audio-visual processing equipment, and may have device content as exemplified by the processing device and the storage device of the collaboration device 110. However, the audio-visual processing device 120 may have a different type of processing device and storage device from the cooperation device 110, and the invention is not limited in this regard. However, in an embodiment, the collaboration device 110 and the audio-visual processing device 120 may be integrated in the same computer host to perform related collaboration operations and audio-visual processing operations. In the present embodiment, the audio-visual processing device 120 may perform an image synthesis operation to synthesize the multimedia pictures and the video image provided by the collaboration device 110 and the camera 140, and output the synthesized image 104 with immersive audio-visual content.

In the present embodiment, the portable electronic device 130 may be, for example, a force feedback glove, augmented reality (AR) glasses, a smart phone, a laptop PC, or a tablet PC, etc., and the invention is not limited thereto. The portable electronic device 130 may output related operation instructions to the collaboration device 110 according to the operation of the user. In the present embodiment, the camera 140 may be a CMOS image sensor or a charge-coupled device (CCD) camera. The camera 140 may be connected to the audio-visual processing device 120 in a wired or wireless manner and communicate with the audio-visual processing device 120 to provide the real-time video image 103 to the audio-visual processing device 120. Moreover, in an embodiment, the multimedia system 100 may also include a microphone or other audio capture devices (not shown) to synchronize with the camera 140 to provide real-time audio data to the audio-visual processing device 120.

FIG. 2 is a flowchart of a multimedia operation method according to an embodiment of the invention. Referring to FIG. 1 and FIG. 2, the multimedia system 100 may execute the multimedia operations of the following steps S210 to S240. In the present embodiment, the user may operate the portable electronic device 130. In step S210, the portable electronic device 130 provides the operation instruction 101. In step S220, the collaboration device 110 receives the operation instruction 101 and provides the multimedia pictures 102. The collaboration device 110 may execute related multimedia programs or multimedia files according to the operation instruction 101 to provide the corresponding multimedia pictures 102 to the audio-visual processing device 120. In step S230, the camera 140 provides the video image 103. In step S240, the audio-visual processing device 120 receives the multimedia pictures 102 and the video image 103, and outputs the synthesized image 104 according to the multimedia pictures 102 and the video image 103. For example, the camera 140 may photograph the user, so that the camera 140 provides the real-time image of the user to the audio-visual processing device 120. At the same time, the user of the collaboration device 110 may operate the portable electronic device 130 to operate, for example, a presentation picture (a slide picture). Next, after the collaboration device 110 receives the operation instruction 101 provided by the portable electronic device 130, the collaboration device 110 provides the presentation picture to the audio-visual processing device 120, and the audio-visual processing device 120 may synthesize the real-time image of the user and the presentation picture into a synthesized image and output the synthesized image. Therefore, another remote user with a remote device may receive the synthesized image, and the other user may view the real-time image of the user and the content of the presentation picture.

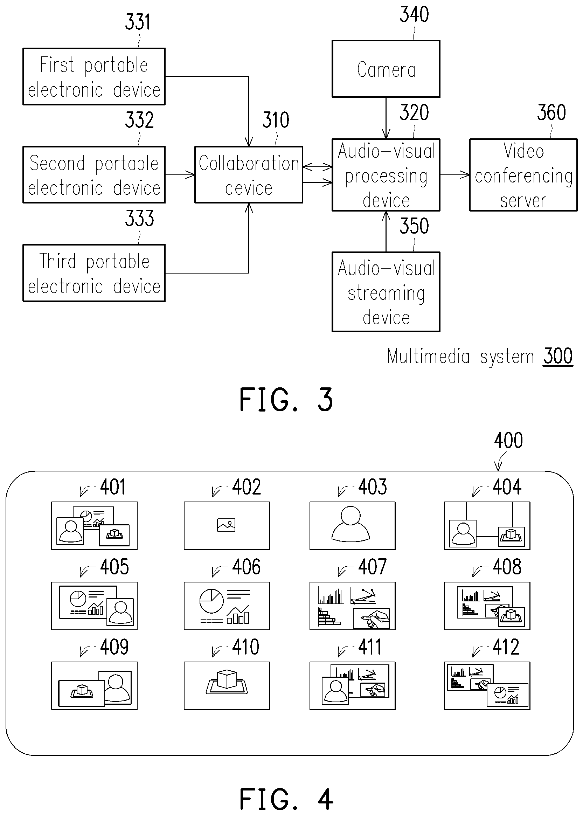

FIG. 3 is a schematic diagram of a multimedia system according to another embodiment of the invention. Referring to FIG. 3, a multimedia system 300 includes a collaboration device 310, an audio-visual processing device 320, a first portable electronic device 331, a second portable electronic device 332, a third portable electronic device 333, a camera 340, an audio-visual streaming device 350, and a video conference server 360. The collaboration device 310 is coupled to the audio-visual processing device 320, the first portable electronic device 331, the second portable electronic device 332, and the third portable electronic device 333. The audio-visual processing device 320 is coupled to the camera 340, the audio-visual streaming device 350, and the video conference server 360. In the present embodiment, the audio-visual streaming device 350 may be, for example, a media streaming device, a set-top box, another camera, or another computer host, etc., which may output a video input stream, and the invention is not limited thereto. The video conference server 360 may be, for example, a cloud server, and may communicate with the first portable electronic device 331, the second portable electronic device 332, and the third portable electronic device 333, and provide a video conference audio-visual content to the first portable electronic device 331, the second portable electronic device 332, and the third portable electronic device 333. In the present embodiment, the first portable electronic device 331, the second portable electronic device 332, and the third portable electronic device 333 may execute a conference application program (app).

In the present embodiment, the first portable electronic device 331, the second portable electronic device 332, and the third portable electronic device 333 may respectively communicate with the collaboration device 310 via wireless communication. The collaboration device 310 may provide a multimedia picture to the audio-visual processing device 320 in a wired or wireless manner. The camera 340 may provide a video image to the audio-visual processing device 320 in a wired manner. The audio-visual streaming device 350 may provide an image input stream to the audio-visual processing device 320 in a wired or wireless manner. In the present embodiment, the audio-visual processing device 320 may provide a synthesized image to the video conference server 360 in a wired or wireless manner, wherein the video conference server 360 may execute a conference software to provide the synthesized image used as at least one portion of the video conference audio-visual content to the second portable electronic device 332 and the third portable electronic device 333. However, in other embodiments of the invention, the multimedia system 300 may also not include at least one of the camera 340, the audio-visual streaming device 350, and the video conference server 360, and the multimedia system 300 may still provide the corresponding synthesized image. Moreover, the number of portable electronic devices that may be connected to the collaboration device 310 and the video conference server 360 of the invention is not limited to that shown in FIG. 3. And the portable electronic devices connected to the video conference server 360 to obtain and display the synthesized image are also not limited to the portable electronic devices. The conference software is, for example, Microsoft teams, Google Meet, Skype, or Zoom, etc.

FIG. 4 is a schematic diagram of a scene selection interface according to an embodiment of the invention. Referring to FIG. 3 and FIG. 4, in the present embodiment, the multimedia picture may include at least one of a slide picture, an image, a three-dimensional object, a webpage picture, an image generated by the camera 340 and the audio-visual streaming device 350, and the current screen display picture of the first portable electronic device 331. In the present embodiment, the audio-visual processing device 320 may output the synthesized image according to the multimedia picture, the video image, and the image input stream. The audio-visual processing device 320 transmits the synthesized image to the video conference server 360 so that the video conference audio-visual content provided by the video conference server 360 includes the synthesized image. In the present embodiment, the first portable electronic device 331 may include a touch display screen, and the first portable electronic device 331 may output a picture operation instruction to the collaboration device 310 according to the touch result of the touch display screen, so that the collaboration device 310 changes the scene of the multimedia picture according to the picture operation instruction.

As shown in FIG. 4, in the present embodiment, the first portable electronic device 331 may execute the conference app, and the touch display screen of the first portable electronic device 331 may display a scene selection interface 400, wherein the scene selection interface 400 may include a plurality of scene selections 401 to 412, but the number of scene selections and the types of scenes of the invention are not limited to those shown in FIG. 4. In the present embodiment, the first portable electronic device 331 may output a scene switching instruction to the collaboration device 310 according to the user's touch selection result of the scene selection interface 400 on the touch display screen of the first portable electronic device 331. Then, the collaboration device 310 may provide the scene switching instruction to the audio-visual processing device 320, so that the audio-visual processing device 320 may switch the image synthesis format displayed by the synthesized image according to the scene switching instruction, and provide the image synthesis format to the video conference server 360.

For example, when the user selects the scene selection 401 via the first portable electronic device 331, the audio-visual processing device 320 may synthesize the video image, the slide picture, and the three-dimensional virtual object to output the synthesized image to the video conference server 360. When the user selects the scene selection 402 via the first portable electronic device 331, the audio-visual processing device 320 may only output the image of the picture to the video conference server 360. When the user selects the scene selection 403 via the first portable electronic device 331, the audio-visual processing device 320 may only output the video image to the video conference server 360. When the user selects the scene selection 404 via the first portable electronic device 331, the audio-visual processing device 320 may synthesize the video image, the current screen display picture of the first portable electronic device 331, and the three-dimensional virtual object to output the synthesized image to the video conference server 360.

When the user selects the scene selection 405 via the first portable electronic device 331, the audio-visual processing device 320 may synthesize the video image and the slide picture to output the synthesized image to the video conference server 360. When the user selects the scene selection 406 via the first portable electronic device 331, the audio-visual processing device 320 may only output the image of the slide picture to the video conference server 360. When the user selects the scene selection 407 via the first portable electronic device 331, the audio-visual processing device 320 may synthesize a plurality of input images of the collaboration device 310 and output the synthesized image to the video conference server 360. When the user selects the scene selection 408 via the first portable electronic device 331, the audio-visual processing device 320 may synthesize the current screen display picture of the first portable electronic device 331 and the three-dimensional virtual object to output the synthesized image to the video conference server 360.

When the user selects the scene selection 409 via the first portable electronic device 331, the audio-visual processing device 320 may synthesize the video image and the three-dimensional virtual object to output the synthesized image to the video conference server 360. When the user selects the scene selection 410 via the first portable electronic device 331, the audio-visual processing device 320 may only output the image of the three-dimensional object to the video conference server 360. When the user selects the scene selection 411 via the first portable electronic device 331, the audio-visual processing device 320 may synthesize the video image and the current screen display picture of the first portable electronic device 331 to output the synthesized image to the video conference server 360. When the user selects the scene selection 412 via the first portable electronic device 331, the audio-visual processing device 320 may synthesize the current screen display picture of the first portable electronic device 331 and the slide picture to output the synthesized image to the video conference server 360.

Therefore, the multimedia system 300 of the present embodiment may provide a diverse image synthesis function, and the video conference server 360 may further provide the conference image with the image provided by the audio-visual processing device 320 to the second portable electronic device 332 and the third portable electronic device 333. In this way, other users operating the second portable electronic device 332 and the third portable electronic device 333 may simultaneously watch the immersive video conference image content, and may experience an immersive audio-visual effect.

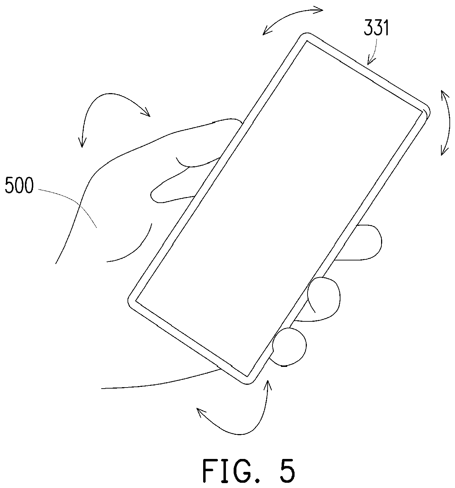

FIG. 5 is a schematic diagram of a portable electronic device according to an embodiment of the invention. Referring to FIG. 3 and FIG. 5, in the present embodiment, for operations such as picture switching, object rotation, and/or webpage turning of slide pictures, images, three-dimensional objects, and/or webpage pictures, the user may also intuitively operate the first portable electronic device 331 to implement the above. In this regard, the first portable electronic device 331 may include an acceleration sensor. A user 500 may hold the portable electronic device 331, and rotate and/or move the portable electronic device 331, so that the acceleration sensor of the portable electronic device 331 may output another picture operation instruction to the collaboration device 310 according to at least one of the movement operation and the rotation operation of the body of the portable electronic device 331, so that the collaboration device 310 changes the multimedia picture according to the other picture operation instruction. In an embodiment, the user 500 may also perform picture zooming, picture movement, or page turning functions, etc. of the slide pictures, images, three-dimensional objects, and/or webpage pictures via the touch behavior on the touch display screen of the portable electronic device 331.

However, in an embodiment, the first portable electronic device 331 may also grant operation permission to the second portable electronic device 332 and/or the third portable electronic device 333 via the conference app. Therefore, the operation of the multimedia picture may also be executed by the second portable electronic device 332 and/or the third portable electronic device 333.

The following takes the immersive distance learning application as an example for description. In this regard, the person operating the first portable electronic device may be, for example, a teacher, the person operating the second portable electronic device may be, for example, a teaching assistant, and the person operating the third portable electronic device may be, for example, a student. It should be noted that the number of the teaching assistant and the student in each of the following embodiments is not limited to one. In extended examples of each of the following embodiments, the number of the teaching assistant and/or the student may be a plurality. In other words, the number of the second portable electronic device and/or the third portable electronic device connected to the collaboration device may be a plurality. In particular, in extended examples of each of the following embodiments, the number of the student is usually a plurality.

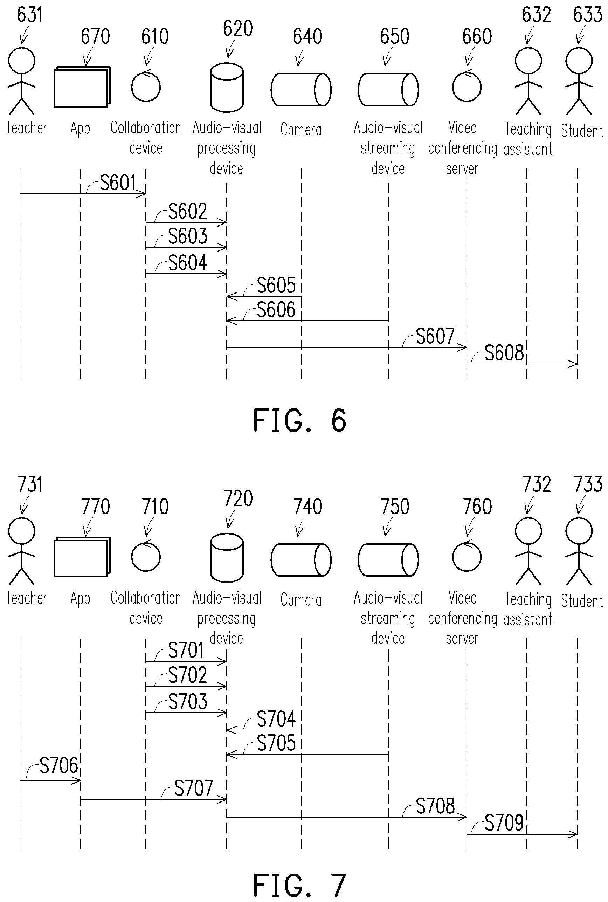

FIG. 6 is a schematic flowchart of an operation scenario according to the first embodiment of the invention. Referring to FIG. 6, a teacher 631 may operate the first portable electronic device. A teaching assistant 632 may operate the second portable electronic device. A student 633 may operate the third portable electronic device. The first portable electronic device, the second portable electronic device, and the third portable electronic device may execute an application 670. The application 670 may be, for example, a teaching (conference) application or other video applications. The first portable electronic device, the second portable electronic device, and the third portable electronic device of the present embodiment are connected to a collaboration device 610. In addition, the collaboration device 610, a camera 640, an audio-visual streaming device 650, and a video conference server 660 are connected to the audio-visual processing device 620. The devices of the first portable electronic device, the second portable electronic device, the third portable electronic device, the collaboration device 610, the audio-visual processing device 620, the camera 640, the audio-visual streaming device 650, and the video conference server 660 and the connection (communication) method of the present embodiment are sufficiently taught, suggested, and implemented in the descriptions of embodiments of FIG. 1 and FIG. 3 and are therefore not repeated herein.

In the present embodiment, when a distance learning video service is performed, in step S601, the teacher 631 may operate the first portable electronic device and output an operation instruction to the collaboration device 610 to activate the collaboration device 610. The operation instruction may be, for example, to select and display a slide picture, a three-dimensional object, and a webpage picture. Therefore, in step S602, the collaboration device 610 may output the image (data) of the slide picture to the audio-visual processing device 620. In step S603, the collaboration device 610 may output the image of the three-dimensional object to the audio-visual processing device 620. In step S604, the collaboration device 610 may output the image of the webpage picture to the audio-visual processing device 620. In step S605, the camera 640 may provide the video image with a real-time teacher character picture to the audio-visual processing device 620. In step S606, the audio-visual streaming device 650 may provide the video image with a real-time classroom picture to the audio-visual processing device 620. In step S607, the audio-visual processing device 620 may synthesize the slide picture, the three-dimensional object, the webpage picture, the video image with the real-time teacher character picture, and the video image with the real-time classroom picture into a new synthesized image with immersive teaching image content, and output the synthesized image to the video conference server 660. In step S608, the video conference server 660 may provide the teaching image with the synthesized image to the second portable electronic device operated by the teaching assistant 632 and/or the third portable electronic device operated by the student 633. In this way, the teaching assistant 632 and/or the student 633 may watch the immersive teaching image content via the second portable electronic device and/or the third portable electronic device.

FIG. 7 is a schematic flowchart of an operation scenario according to the second embodiment of the invention. Referring to FIG. 7, the device features of the first portable electronic device, the second portable electronic device, the third portable electronic device, a collaboration device 710, an audio-visual processing device 720, a camera 740, an audio-visual streaming device 750, and a video conference server 760 and the technical features of the connection (communication) method and an application 770 of the present embodiment are sufficiently taught, suggested, and implemented in the descriptions of embodiments of FIG. 1, FIG. 3, and FIG. 6 and are therefore not repeated herein.

In the present embodiment, when a distance learning video is in progress, in step S701, the collaboration device 710 may output the image (data) of the slide picture to the audio-visual processing device 720. In step S702, the collaboration device 710 may output the image of the three-dimensional object to the audio-visual processing device 720. In step S703, the collaboration device 710 may output the image of the webpage picture to the audio-visual processing device 720. In step S704, the camera 740 may provide the video image with a real-time teacher character picture to the audio-visual processing device 720. In step S705, the audio-visual streaming device 750 may provide the video image with a real-time classroom picture to the audio-visual processing device 720. In step S706, a teacher 731 may operate the first portable electronic device and execute the scene selection interface of the application 770 (as the scene selection interface 400 shown in FIG. 4). In step S707, the application 770 may output a scene switching instruction to the collaboration device 710, and then provide the scene switching instruction to the audio-visual processing device 720 via the collaboration device 710. In step S708, the audio-visual processing device 720 may determine the synthesis result of the slide picture, the three-dimensional object, the webpage picture, the video image with the real-time teacher character picture, and the video image with the real-time classroom picture according to the scene switching instruction. In an embodiment, the application 770 may also directly output the scene switching instruction to the audio-visual processing device 720. The audio-visual processing device 720 may output the synthesized image to the video conference server 760. In step S709, the video conference server 760 may provide the teaching image with the synthesized image to the second portable electronic device operated by a teaching assistant 732 and/or the third portable electronic device operated by a student 733. In this way, the teaching assistant 732 and/or the student 733 may watch the immersive teaching image content via the second portable electronic device and/or the third portable electronic device.

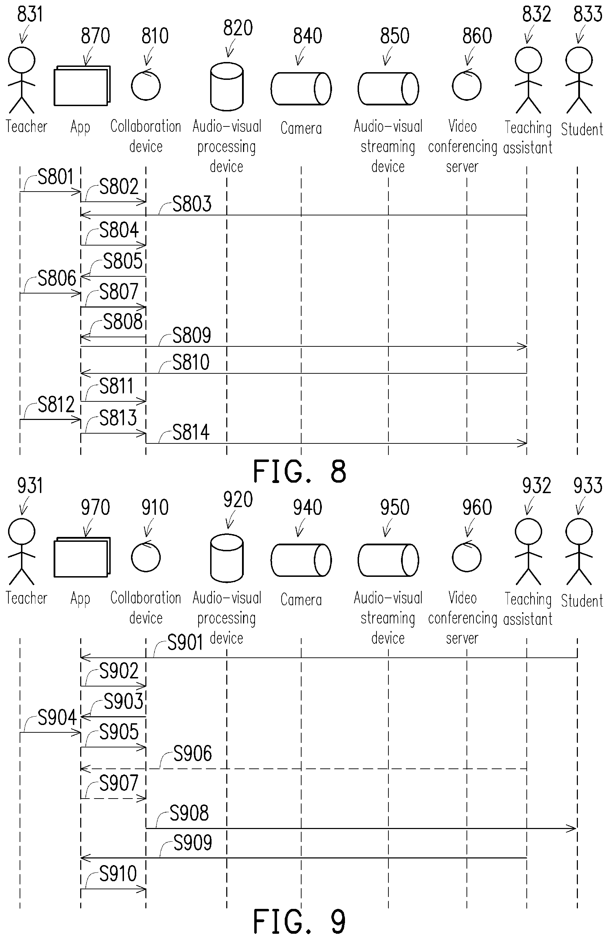

FIG. 8 is a schematic flowchart of an operation scenario according to the third embodiment of the invention. Referring to FIG. 8, the device features of the first portable electronic device, the second portable electronic device, the third portable electronic device, a collaboration device 810, an audio-visual processing device 820, a camera 840, an audio-visual streaming device 850, and a video conference server 860 and the technical features of the connection (communication) method and an application 870 of the present embodiment are sufficiently taught, suggested, and implemented in the descriptions of embodiments of FIG. 1, FIG. 3, and FIG. 6 and are therefore not repeated herein.

In the present embodiment, when the distance learning video service as in the embodiment of FIG. 6 or FIG. 7 is in progress, for example, after step S608 or step S709, the multimedia system may adjust the operation permission. In step S801, a teacher 831 may operate the application 870 via the first portable electronic device, such as requesting to rotate the three-dimensional object. In step S802, the application 870 outputs an operation instruction to the collaboration device 810, so that the three-dimensional object in the image output by the collaboration device 810 may be correspondingly changed according to the operation result of the teacher 831 on the first portable electronic device. Correspondingly, the synthesized image content output by the audio-visual processing device 820 is also correspondingly changed. In step S803, a teaching assistant 832 sends a permission request instruction to the application 870 via the second portable electronic device, requesting permission to control the collaboration device 810. In step S804, the application 870 notifies the collaboration device 810. In step S805, the collaboration device 810 inquires the teacher 831 with the first portable electronic device via the application 870. In this regard, the second portable electronic device may communicate with the first portable electronic device to provide the permission request instruction to the first portable electronic device. In step S806, the teacher 831 may operate the first portable electronic device to generate a consent instruction according to the permission request instruction, and provide the consent instruction to the application 870. In step S807, the application 870 notifies the collaboration device 810. In step S808, the collaboration device 810 responds to the application 870 according to the consent instruction. In step S809, the application 870 responds to the teaching assistant 832 with the second portable electronic device and notifies the teaching assistant 832 that the collaboration device 810 may begin to be operated. In step S810, the teaching assistant 832 may operate the second portable electronic device to provide another operation instruction to the application 870. In step S811, the application 870 provides another operation instruction to the collaboration device 810, so that the three-dimensional object in the image output by the collaboration device 810 may be correspondingly changed according to the operation result of the teaching assistant 832 on the second portable electronic device. Correspondingly, the content of the synthesized image output by the audio-visual processing device 820 is also changed accordingly, and the second portable electronic device and/or the third portable electronic device operated by the teaching assistant 832 and/or a student 833 may also receive the new synthesized image. In other words, the first portable electronic device may provide another operation instruction provided by the second portable electronic device to the collaboration device 810 according to the permission request instruction and the consent instruction, so that the multimedia picture is changed with another operation instruction. In step S812, the teacher 831 may operate the first portable electronic device to output a permission withdrawal instruction to the application 870. In step S813, the collaboration device 810 may be notified according to the permission withdrawal instruction. In step S813, the collaboration device 810 may notify the second portable electronic device operated by the teaching assistant 832 (or be notified by the application 870) to notify the teaching assistant 832 that the operating permission thereof is withdrawn.

FIG. 9 is a schematic flowchart of an operation scenario according to the fourth embodiment of the invention. Referring to FIG. 9, the device features of the first portable electronic device, the second portable electronic device, the third portable electronic device, a collaboration device 910, an audio-visual processing device 920, a camera 940, an audio-visual streaming device 950, and a video conference server 960 and the technical features of the connection (communication) method and an application 970 of the present embodiment are sufficiently taught, suggested, and implemented in the descriptions of embodiments of FIG. 1, FIG. 3, and FIG. 6 and are therefore not repeated herein.

In the present embodiment, when the distance learning video service as in the embodiment of FIG. 6 or FIG. 7 is in progress, for example, after step S608 or step S709, the multimedia system may adjust the operation permission. In step S901, a student 933 sends a permission request instruction to the application 970 via the third portable electronic device. In step S902, the application 970 notifies the collaboration device 910. In step S903, the collaboration device 910 inquires the first portable electronic device via the application 970. In this regard, the third portable electronic device may communicate with the first portable electronic device to provide the permission request instruction to the first portable electronic device. In step S904, a teacher 931 may operate the first portable electronic device to generate a consent instruction according to the permission request instruction, and provide the consent instruction to the application 970. In step S905, the application 970 notifies the collaboration device 910. Or, in an embodiment, in step S906 (alternative to step S904), a teaching assistant 932 may operate the second portable electronic device to generate the consent instruction according to the permission request instruction in place of the teacher 931 and provide the consent instruction to the application 970. In step S907 (alternative to step S905), the application 970 notifies the collaboration device 910. In step S908, the collaboration device 910 responds to the third portable electronic device operated by the student 933 according to the consent instruction. In step S909, the student 933 may operate the third portable electronic device to provide the operation instruction to the application 970. In step S910, the application 970 provides the operation instruction to the collaboration device 910, so that the three-dimensional object in the image output by the collaboration device 910 may be correspondingly changed according to the operation result of the student 933 on the third portable electronic device. Correspondingly, the synthesized image content output by the audio-visual processing device 920 is also correspondingly changed.

In other words, the first portable electronic device may generate the consent instruction according to the permission request instruction. The first portable electronic device may provide the operation instruction provided by the third portable electronic device to the collaboration device according to the permission request instruction and the consent instruction, so that the multimedia picture is changed with the operation instruction. Or, the second portable electronic device may generate another consent instruction according to the permission request instruction. The second portable electronic device may provide the operation instruction provided by the third portable electronic device to the collaboration device according to the permission request instruction and the other consent instruction, so that the multimedia picture is changed with the operation instruction.

Moreover, it should be mentioned that, when the collaboration device 810 receives a plurality of operation instructions provided by different portable electronic devices, the collaboration device 810 may execute the operation instructions sequentially according to the order in which the operation instructions are received.

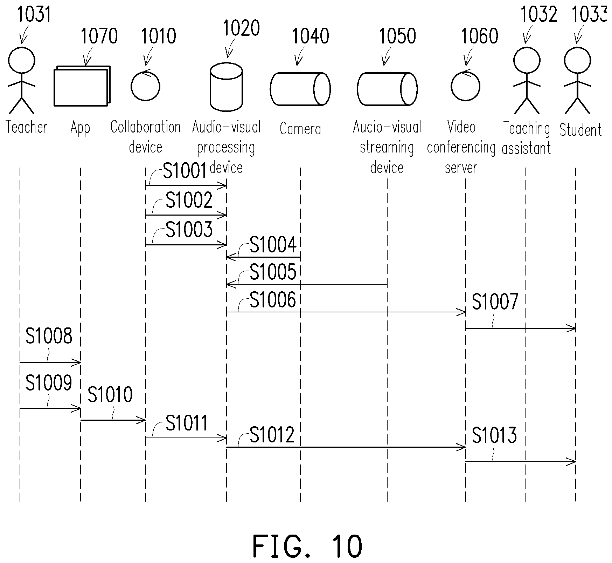

FIG. 10 is a schematic flowchart of an operation scenario according to the fifth embodiment of the invention. Referring to FIG. 10, the device features of the first portable electronic device, the second portable electronic device, the third portable electronic device, a collaboration device 1010, an audio-visual processing device 1020, a camera 1040, an audio-visual streaming device 1050, and a video conference server 1060 and the technical features of the connection (communication) method and an application 1070 of the present embodiment are sufficiently taught, suggested, and implemented in the descriptions of embodiments of FIG. 1, FIG. 3, and FIG. 6 and are therefore not repeated herein.

In the present embodiment, when a distance learning video service is in progress, in step S1001, the collaboration device 1010 may output the image (data) of the slide picture to the audio-visual processing device 1020. In step S1002, the collaboration device 1010 may output the image of the three-dimensional object to the audio-visual processing device 1020. In step S1003, the collaboration device 1010 may output the image of the webpage picture to the audio-visual processing device 1020. In step S1004, the camera 1040 may provide the video image with a real-time teacher character picture to the audio-visual processing device 1020. In step S1005, the audio-visual streaming device 1050 may provide the video image with a real-time classroom picture to the audio-visual processing device 1020. In step S1006, the audio-visual processing device 1020 may synthesize the slide picture, the three-dimensional object, the webpage picture, the video image with the real-time teacher character picture, and the video image with the real-time classroom picture into a new synthesized image with immersive teaching image content, and output the synthesized image to the video conference server 1060. In step S1007, the video conference server 1060 may provide the teaching image with the synthesized image to the second portable electronic device operated by a teaching assistant 1032 and/or the third portable electronic device operated by a student 1033. In this way, the teaching assistant 1032 and/or the student 1033 may watch the immersive teaching image content via the second portable electronic device and/or the third portable electronic device. In step S1008, a teacher 1031 may operate the first portable electronic device to select a three-dimensional object via the application 1070, for example. In step S1009, the teacher 1031 may hold the first portable electronic device (as shown in FIG. 5) and rotate the first portable electronic device to output a rotation operation instruction to the application 1070. In step 51010, the application 1070 further provides the rotation operation instruction to the collaboration device 1010, so that the collaboration device 1010 rotates the three-dimensional object. In step S1011, the collaboration device 1010 provides the image of the rotated three-dimensional object to the audio-visual processing device 1020. In step S1012, the audio-visual processing device 1020 may synthesize the slide picture, the rotated three-dimensional object, the webpage picture, the video image with the real-time teacher character picture, and the video image with the real-time classroom picture into a new synthesized image, and output the new synthesized image to the video conference server 1060. In step S1013, the video conference server 1060 may provide the new teaching image to the second portable electronic device operated by the teaching assistant 1032 and/or the third portable electronic device operated by the student 1033. In this way, the teaching assistant 1032 and/or the student 1033 may watch the updated teaching image content via the second portable electronic device and/or the third portable electronic device.

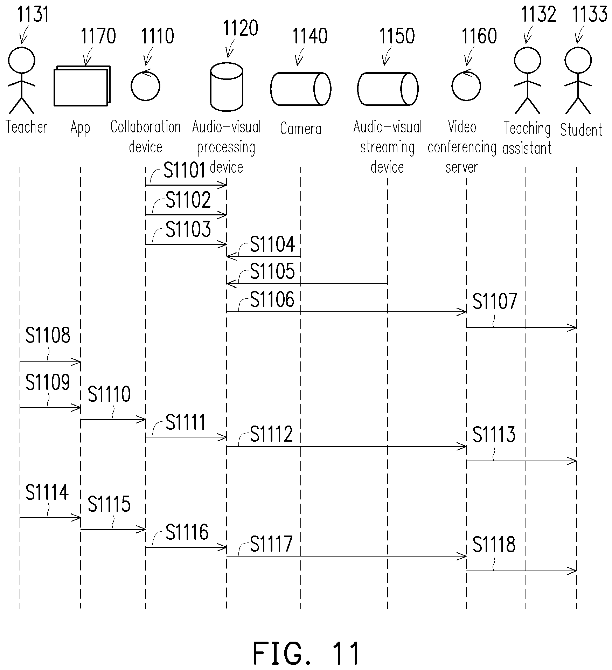

FIG. 11 is a schematic flowchart of an operation scenario according to the sixth embodiment of the invention. Referring to FIG. 11, the device features of the first portable electronic device, the second portable electronic device, the third portable electronic device, a collaboration device 1110, an audio-visual processing device 1120, a camera 1140, an audio-visual streaming device 1150, and a video conference server 1160 and the technical features of the connection (communication) method and an application 1170 of the present embodiment are sufficiently taught, suggested, and implemented in the descriptions of embodiments of FIG. 1, FIG. 3, and FIG. 6 and are therefore not repeated herein.

In the present embodiment, when a distance learning video service is in progress, in step S1101, the collaboration device 1110 may output the image (data) of the slide picture to the audio-visual processing device 1120. In step S1102, the collaboration device 1110 may output the image of the three-dimensional object to the audio-visual processing device 1120. In step S1103, the collaboration device 1110 may output the image of the webpage picture to the audio-visual processing device 1120. In step S1104, the camera 1140 may provide the video image with a real-time teacher character picture to the audio-visual processing device 1120. In step S1105, the audio-visual streaming device 1150 may provide the video image with a real-time classroom picture to the audio-visual processing device 1120. In step S1106, the audio-visual processing device 1120 may synthesize the slide picture, the three-dimensional object, the webpage picture, the video image with the real-time teacher character picture, and the video image with the real-time classroom picture into a new synthesized image with immersive teaching image content, and output the synthesized image to the video conference server 1160. In step S1107, the video conference server 1160 may provide the teaching image with the synthesized image to the second portable electronic device operated by a teaching assistant 1132 and/or the third portable electronic device operated by a student 1133. In this way, the teaching assistant 1132 and/or the student 1133 may watch the immersive teaching image content via the second portable electronic device and/or the third portable electronic device. In step S1108, a teacher 1131 may operate the first portable electronic device to select a webpage picture via the application 1170, for example. In step S1109, the teacher 1131 may hold the first portable electronic device (as shown in FIG. 5) and tilt the first portable electronic device up and down to output an operation instruction of sliding up and down to the application 1170. In step S1110, the application 1170 further provides the operation instruction of sliding up and down to the collaboration device 1110, so that the collaboration device 1110 may slide up and down or turn the pages of the webpage picture up and down. In step S1111, the collaboration device 1110 provides the image of the changed webpage picture to the audio-visual processing device 1120. In step S1112, the audio-visual processing device 1120 may synthesize the slide picture, the three-dimensional object, the changed webpage picture, the video image with the real-time teacher character picture, and the video image with the real-time classroom picture into a new synthesized image, and output the new synthesized image to the video conference server 1160. In step S1113, the video conference server 1160 may provide the new teaching image to the second portable electronic device operated by the teaching assistant 1132 and/or the third portable electronic device operated by the student 1133. In this way, the teaching assistant 1132 and/or the student 1133 may watch the updated teaching image content via the second portable electronic device and/or the third portable electronic device.

In step S1114, the teacher 1131 may hold the first portable electronic device (as shown in FIG. 5) and tilt the first portable electronic device left and right to output an operation instruction of sliding left and right to the application 1170. In step S1115, the application 1170 further provides the operation instruction of sliding left and right to the collaboration device 1110, so that the collaboration device 1110 may slide left and right or turn the pages of the webpage picture left and right. In step S1116, the collaboration device 1110 provides the image of the changed webpage picture to the audio-visual processing device 1120. In step S1117, the audio-visual processing device 1120 may synthesize the slide picture, the three-dimensional object, the changed webpage picture, the video image with the real-time teacher character picture, and the video image with the real-time classroom picture into a new synthesized image, and output the new synthesized image to the video conference server 1160. In step S1118, the video conference server 1160 may provide the new teaching image to the second portable electronic device operated by the teaching assistant 1132 and/or the third portable electronic device operated by the student 1133. In this way, the teaching assistant 1132 and/or the student 1133 may watch the updated teaching image content via the second portable electronic device and/or the third portable electronic device.

Based on the above, the multimedia system and the multimedia operation method of the invention may synthesize a plurality of multimedia pictures and video images into synthesized images with an immersive audio-visual effect, and provide different users with real-time viewing of the synthesized images. The multimedia system and the multimedia operation method of the invention may change the scene of the synthesized images according to the operation of the user, so as to provide a diverse immersive distance learning effect. The multimedia system and the multimedia operation method of the invention enable each user to participate in the video conference to have the permission to change the picture content of the multimedia pictures, so as to achieve a convenient conference effect. In the multimedia system and the multimedia operation method of the invention, the user may hold the portable electronic device and operate and change the picture content of the multimedia pictures by the different gestures of the user or touch modes, so as to provide a convenient operation effect.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A multimedia system, comprises:
a first portable electronic device (130, 331), configured to provide a first operation instruction;
a collaboration device (110, 310), coupled to the first portable electronic device (130, 331) and configured to receive the first operation instruction, wherein the collaboration device (110, 310) provides a multimedia picture, and the multimedia picture is changed with the first operation instruction;
a camera (140, 340), configured to provide a video image; and
an audio-visual processing device (120, 320), coupled to the collaboration device and the camera, and the audio-visual processing device (120, 320) is configured to receive the multimedia picture and the video image, and output a synthesized image according to the multimedia picture and the video image.

2. The multimedia operation system according to claim 1, wherein the multimedia picture comprises at least one of a slide picture, an image, a three-dimensional object, a webpage picture, an image generated by a camera or an audio-visual streaming device, and a current screen display picture of the first portable electronic device.

3. The multimedia system according to claim 1 or 2, wherein the audio-visual processing device (120, 320) is further configured to receive an image input stream and output the synthesized image according to the multimedia picture, the video image, and the image input stream.

4. The multimedia system according to claim 1, 2 or 3, wherein the audio-visual processing device (120, 320) is further configured to transmit the synthesized image to a video conference server (360) via the audio-visual processing device (120, 320), and a video conference audio-visual content provided by the video conference server (360) comprises the synthesized image.

5. The multimedia system according to any one of the preceding claims, wherein the first portable electronic device (130, 331) comprises a touch display screen, and the touch display screen is configured to display a scene selection interface, wherein the scene selection interface comprises a plurality of scene selections, and the first portable electronic device (120, 331) is configured to output a scene switching instruction to the collaboration device (110, 310) according to a touch selection result of the scene selection interface,
wherein the collaboration device (110, 310) is configured to provide the scene switching instruction to the audio-visual processing device (120, 320), and the audio-visual processing device (120, 320) is configured to switch an image synthesis format displayed by the synthesized image according to the scene switching instruction.

6. The multimedia system according to any one of the preceding claims 1-4, wherein the first portable electronic device (130, 331) comprises a touch display screen, and the first portable electronic device (130, 331) is configured to output a picture operation instruction to the collaboration device (110, 310) according to a touch result of the touch display screen, and the collaboration device (110, 310) is configured to change the multimedia picture according to the picture operation instruction.

7. The multimedia system according to any one of the preceding claims, wherein the first portable electronic device (130, 331) comprises an acceleration sensor, the acceleration sensor is configured to output another picture operation instruction to the collaboration device (110, 310) according to at least one of a movement operation and a rotation operation of the first portable electronic device (130, 331), and the collaboration device (110, 310) is configured to change the multimedia picture according to the other picture operation instruction.

8. The multimedia system according to any one of the preceding claims, further comprising:
a second portable electronic device (332), communicating with the first portable electronic device (331), the second portable electronic device (332), is configured to provide a first permission request instruction to the first portable electronic device (331),
wherein the first portable electronic device (331) is configured to generate a first consent instruction according to the first permission request instruction, and the first portable electronic device (331) is configured to provide a second operation instruction provided by the second portable electronic device (332) to the collaboration device (110, 310) according to the first permission request instruction and the first consent instruction, and the multimedia picture is changed with the second operation instruction.

9. The multimedia system according to claim 8, further comprising:
a third portable electronic device (333), communicating with the first portable electronic device (331), the third portable electronic device (333) is configured to provide a second permission request instruction to the first portable electronic device (331),
wherein the first portable electronic device (331) is configured to generate a second consent instruction according to the second permission request instruction, and the first portable electronic device (331) is configured to provide a third operation instruction provided by the third portable electronic device (333) to the collaboration device (110, 310) according to the second permission request instruction and the second consent instruction, and the multimedia picture is changed with the third operation instruction,
wherein the collaboration device (110, 310) is configured to execute sequentially according to a receiving order of the first to third operation instructions.

10. The multimedia system according to claim 8 or 9, further comprising:
a third portable electronic device (333), communicating with the second portable electronic device (332) and configured to provide a third permission request instruction to the second portable electronic device (332),
wherein the second portable electronic device (332) is configured to generate a third consent instruction according to the third permission request instruction, and the second portable electronic device (332) is configured to provide a fourth operation instruction provided by the third portable electronic device (333) to the collaboration device (110, 310) according to the third permission request instruction and the third consent instruction, and the multimedia picture is changed with the fourth operation instruction.

11. A multimedia operation method, comprising:
providing (S210) a first operation instruction via a first portable electronic device (130, 331);
receiving (S220) the first operation instruction via a collaboration device (110, 310) and providing a multimedia picture, wherein the multimedia picture is changed with the first operation instruction;
providing (S230) a video image via a camera (140, 340); and
receiving (S240) the multimedia picture and the video image via an audio-visual processing device (120, 320) and outputting a synthesized image according to the multimedia picture and the video image.

12. The multimedia operation method according to claim 11, further comprising:
receiving an image input stream via the audio-visual processing device (120, 320); and
outputting the synthesized image via the audio-visual processing device (120, 320) according to the multimedia picture, the video image, and the image input stream.

13. The multimedia operation method according to claim 11 or 12, further comprising:
transmitting the synthesized image to a video conference server (360) via the audio-visual processing device (120, 320), and a video conference audio-visual content provided by the video conference server (360) comprises the synthesized image.

14. The multimedia operation method according to claim 11, 12 or 13 further comprising:
providing a first permission request instruction to the first portable electronic device (331) via a second portable electronic device (332);
generating a first consent instruction via the first portable electronic device (331) according to the first permission request instruction;
providing a second operation instruction provided by the second portable electronic (332) device to the collaboration device (110, 310) via the first portable electronic device (331) according to the first permission request instruction and the first consent instruction; and
changing the multimedia picture via the collaboration device (110, 310) according to the second operation instruction.

15. The multimedia operation method according to claim 14, further comprising:
providing a second permission request instruction to the first portable electronic device (331) via a third portable electronic device (333);
generating a second consent instruction via the first portable electronic device (331) according to the second permission request instruction;
providing a third operation instruction provided by the third portable electronic device (333) to the collaboration device (110, 310) via the first portable electronic device (331) according to the second permission request instruction and the second consent instruction; and
changing the multimedia picture via the collaboration device (110, 310) according to the third operation instruction,
wherein the collaboration device (110, 310) executes sequentially according to a receiving order of the first to third operation instructions.

16. The multimedia operation method according to claim 15, further comprising:
providing a third permission request instruction to the second portable electronic device (332) via a third portable electronic device (333);
generating a third consent instruction via the second portable electronic device (332) according to the third permission request instruction;
providing a fourth operation instruction provided by the third portable electronic device (333) to the collaboration device (110, 310) via the second portable electronic device (332) according to the third permission request instruction and the third consent instruction; and
changing the multimedia picture via the collaboration device (110, 310) according to the fourth operation instruction.
